# FASCICULE DE BREVET EUROPEEN

(11) **EP 3 008 248 B1**
(45) Date de publication et mention de la délivrance du brevet: **28.02.2018**
(21) Numéro de dépôt: 14734853.6
(22) Date de dépôt: 20.05.2014
(51) Int. Cl.: E02B 1/00, E02B 3/02, E02B 3/12, C08L 33/00

(54) **PROCÉDÉ POUR LIMITER LE NIVEAU DES CRUES ET COMBATTRE LES INONDATIONS**
VERFAHREN ZUR BEGRENZUNG VON SCHMELZWASSERABFLUSS UND ÜBERSCHWEMMUNGSKONTROLLE
METHOD FOR LIMITING FRESHET LEVELS AND CONTROLLING FLOODS

(30) Priorité: 10.06.2013 FR 1355310
(43) Date de publication de la demande: 20.04.2016
(73) Titulaire: S.P.C.M. SA, 42160 Andrézieux Bouthéon (FR)
(72) Inventeur: PICH, René, F-42000 Saint Etienne (FR)
(74) Mandataire: Cabinet Laurent & Charras
(86) Numéro de dépôt international: PCT/FR2014/051176
(87) Numéro de publication internationale: WO 2014/199037

(56) Documents cités:
- WO-A1-2008/107492
- DE-A1- 19 732 106
- US-A1- 2012 214 714

## Description

Le nombre de catastrophes naturelles dues aux inondations a doublé en 10 ans. En 2010, 178 millions de personnes ont été victimes de ce phénomène qui s'est amplifié d'une part à cause des conditions naturelles, d'autre part à cause de l'augmentation démographique et de l'urbanisation.

Un certain nombre de ces inondations se sont produites dans des villes par débordement de rivières ou de fleuves, d'autres sur des côtes à cause des marées.

On peut citer comme exemple l'inondation de Prague par la Vltava où les calculs avaient prévu un débit maximum de 2900 m³/seconde alors qu'en fait, il a été voisin de 6000 m³/seconde. Le métro, par exemple, n'a pu être remis en état de marche qu'après 6 mois.

L'évolution successive des villes en particulier, a créé des largeurs de fleuves fixes qu'il n'est pratiquement pas possible de modifier, ce qui ne permet que des mesures correctives mineures pour leur protection. Parmi ces mesures, on peut citer le délestage en amont sur des surfaces agricoles ce qui a été fait pour le Mississipi ou la construction de réservoir dont l'efficacité est limitée.

Dans les villes elles-mêmes, les architectes construisent des immeubles résistants aux inondations ou prévoient l'emmurement des stations de métro, les plans d'évacuations, les plans de secours. Mais la taille des métropoles inondables est telle que les dispositions prises ne sont que mineures par rapport au phénomène et aux coûts gigantesques de reconstruction.

En effet, ces grandes villes sont parcourues par des réseaux d'égouts, des tunnels, des excavations, des carrières souterraines qui mettent en communication de vastes surfaces qui, autrefois, étaient indépendantes.

Finalement, il n'existe pas de solution d'envergure pour éviter des catastrophes liées à des crues exceptionnelles, telles que des crues centennales qui pourraient affecter en particulier les grandes villes.

Il existe donc un besoin de solution nouvelle permettant d'atténuer les phénomènes d'inondation et leurs conséquences.

Le document DE 19732106 décrit un procédé permettant de limiter les inondations. Ce procédé consiste à provoquer des explosions au moyen d'explosifs maintenus dans le lit de la rivière. Les ondes provoquées par ces explosions accélèrent le débit de l'eau. Ce procédé implique la mise en place d'explosifs potentiellement dangereux à des endroits qui restent aléatoires en fonctions du courant.

Le Demandeur a eu l'idée d'injecter dans le cours d'eau en cru un réducteur de friction en utilisant l'effet Toms. La mise en oeuvre du procédé par injection est ainsi facilitée et évite les risques liés aux explosifs.

L'effet de Toms, découvert en 1946, appelé réduction de trainée (drag réduction) permet, avec la même puissance, d'augmenter un débit de liquide par l'addition de réducteur de friction tel que par exemple des argiles, des tensio actifs, ou des produits organiques tels que des polymères hydrosolubles.

Les applications industrielles des polymères hydrosolubles se font actuellement dans le transport d'eau en tuyauterie de longue distance avec des vitesses de 2 à 3 mètres par seconde, et en particulier dans les industries du pétrole, de l'agriculture ou minière en milieu aride. A titre d'exemple, le document US 2012/0214714 décrit un procédé de fracturation hydraulique, selon lequel des polymères hydrosolubles sont introduits dans le fluide de fracturation afin de réduire les phénomènes de friction dans les conduits fermés.

Des quantités plus anecdotiques sont utilisées pour augmenter la vitesse des vedettes lance torpilles, les torpilles elles-mêmes étant découpées à jet d'eau contenant un polymère hydrosoluble.

Leur application industrielle a commencé dans les années 70 et se développe régulièrement.

En appliquant l'effet Toms au cours d'eau en cru, le déposant a recherché une méthode permettant un écoulement plus rapide des eaux pour obtenir un résultat sensible sur le niveau des eaux en cas d'inondation.

Dans un mode de réalisation préféré, le Demandeur propose de mettre en oeuvre, en tant que réducteur de friction, des polymères hydrosolubles dans les fleuves, rivières et/ou affluents pour favoriser l'écoulement des eaux et donc diminuer le niveau des crues.

L'invention a ainsi pour objet un procédé pour limiter le niveau des crues d'un cours d'eau, en particulier d'un fleuve, d'une rivière et/ou d'un de leur affluent consistant à injecter dans ledit cours d'eau au moins un réducteur de friction, avantageusement un polymère hydrosoluble.

L'invention est particulièrement intéressante pour protéger les grandes villes et métropoles très peuplées et qui n'ont plus les moyens de modifier leur architecture pour faire face à des crues exceptionnelles.

Les polymères hydrosolubles injectés peuvent être sous forme solide ou liquide. Ils seront préférentiellement sous forme poudre.

L'injection du polymère hydrosoluble consiste à verser par tout moyen connu le ou les polymères hydrosolubles, préférentiellement sous forme poudre, directement dans le ou les cours d'eau en amont de la ville à protéger. Cette injection peut se faire au bord ou au milieu du cours d'eau. Dans un mode de réalisation préféré, le polymère hydrosoluble est dispersé par une pompe centrifuge et injecté directement dans le cours d'eau.

Généralement, le polymère hydrosoluble est stocké dans des silos sur le bord des cours d'eau.

Les polymères hydrosolubles de très haut poids moléculaires sont les composés les plus efficaces.

Les polymères hydrosolubles sont préférentiellement à base d'acrylamide. Parmi ces polymères, les copolymères préparés à partir des monomères suivants sont particulièrement intéressants : l'acide acrylique, l'ATBS (2-acrylamido-2-methylpropanesulfonic acide), le chlorure de diallyl diméthyl ammonium (DADMAC), l'acrylate de dialkylaminoéthyle (ADAME) et le méthacrylate de dialkylaminoéthyle (MADAME) ainsi que leurs sels acidifiés ou quatemisés, la N-vinyl pyrrolidone.

De manière préférentielle, les polymères hydrosolubles sont des copolymères à base d'acrylamide et d'acide acrylique, plus particulièrement ceux contenant entre 50% et 90% molaire d'acrylamide.

Le poids moléculaire de ces polymères à base d'acrylamide est préférentiellement compris entre 5 et 30 millions de g/mol, et plus préférentiellement entre 10 et 25 millions de g/mol.

Les polyoxydes d'éthylène sont aussi efficaces mais leur poids moléculaire est plus faible (6 à 10 millions maximum) avec une sensibilité à la dégradation mécanique et un prix de revient plus élevé.

Les polymères hydrosolubles sont efficaces à partir de vitesses d'écoulement du cours d'eau de l'ordre de 1,5 mètre/seconde et surtout au-delà de 2 mètre/seconde. Suivant les vitesses, il est possible d'atteindre 30 % de réduction de perte de charge avec des quantités de 50 à 100 parties par million. Avec des quantités supérieures, on plafonne à 70 % d'augmentation.

La quantité de polymère hydrosoluble injecté dans le fleuve, la rivière, et/ou leur affluent est comprise entre 10 et 1000 ppm, et sera ajustée par l'homme de l'art selon le niveau des crues.

Evidemment, l'application au problème des inondations est nouvelle et demande des études approfondies en fonction des débits et des profils. En particulier, la mesure d'une vitesse sur une distance ne tient pas compte des obstacles (ponts, rétrécissements, objets bloqués,...) qui accélèrent fortement la vitesse et créent des effets de turbulence où la vitesse instantanée est plusieurs fois la vitesse moyenne.

Il faut tenir compte aussi que les crues sont très différentes en plaine où le temps d'alerte est suffisant pour agir et les crues torrentielles extrêmement rapides et avec des pics très importants. On peut citer des crues du var à 3800 m³/sec alors que les crues de Seine ne dépassent pas 2200 m³/seconde. Dans certains cas, des phénomènes annexes, et en particulier le vent, réduisent ou accélèrent la vitesse de l'eau.

Evidemment, chaque cas est particulier et une étude à la fois par modélisation et par test est nécessaire.

De plus, l'addition d'un produit chimique dans un fleuve peut amener des réticences écologiques. En fonction des enjeux énormes, l'examen approfondi du problème sera nécessaire.

En effet, le polyacrylamide par lui-même ne présente aucune toxicité, cependant un faible résidu de monomère (acrylamide) peut poser des questions. Heureusement, l'acrylamide est facilement biodégradable et le ruissellement sur des surfaces saturées en eau ne doit pas constituer un risque de pollution des nappes phréatiques. Ce problème doit être vérifié avec objectivité.

L'exemple suivant permet d'illustrer l'invention et les avantages qui en découlent.

### Ville de Paris

Les grandes inondations de la Seine qui se sont produites à Paris sont les grandes crues de 1176, 1658 (niveau 8m96) et 1740. Mais la crue la plus spectaculaire car relativement récente a été celle de janvier 1910 où le niveau a atteint 8m42 contre 3m60 en temps normal moyen. Cette crue a duré 20 jours avec un retour à la normale en 45 jours. Le débit constaté a été de 2000 à 2200 m³/seconde.

La Seine par elle-même en amont de ses principaux affluents est un petit fleuve qui reçoit en particulier :
- L'Yonne moyenne 92m³/sec crue 960 m³/sec
- Marne moyenne 110 m³/sec crue 650 m³/sec
- Aube moyenne 41 m³/sec crue 330 m³/sec
- Loing moyenne 18 m³/sec crue 315 m³/sec
- Eure moyenne 26 m³/sec crue 140 m³/sec
- Seine à Paris moyenne 450 m³/sec crue 2000 m³/sec

La vitesse de la Seine en moyenne est de 1 à 2 km/heure (0,3 à 0,6m/sec). En début de crue, elle passe à 4 km/heure (1,1m/sec) pour se stabiliser à 5-7 km/heure pendant les crues (1,4 à 1,9 m/sec). Cependant, les vitesses instantanées peuvent être pratiquement le double dans les passages rétrécis et en fonction des turbulences qui réduisent fortement les débits. Les réservoirs de crues actuellement construits permettent d'absorber environ 60 cm de crue sans l'empêcher.

L'utilisation d'un agent de réduction de trainée à une dose à définir de l'ordre de 50 à 100 ppm permettrait une augmentation de débit moyen de 20 à 30 % en pointe. Evidemment, les quantités nécessaires paraissent énormes. Avec un débit de 2000 m³/seconde, il faut à 100 ppm 0,2 tonne de produit par seconde soit 720 tonnes/heure, 17 280 tonnes pour 24 heures, 172 800 tonnes pour 10 jours. Cependant, le cout serait de l'ordre de 500 millions d'euros, faible par rapport au coût d'une inondation centennale en tenant compte aussi que le niveau de 2000 m³/seconde peut être dépassé en cas de situation catastrophique.

On peut citer par exemple les crues du Danude et de l'Inn qui en 2002 ont provoquées de gigantesques dégâts estimés par les autorités à 7.5 milliards d'euros. A cela s'ajoute l'évacuation d'une partie de la population.

La loi Barnier de 1995 a prévu un Plan de Prévention pour les Risques d'Inondation (PPRI) qui prévoit l'arrêt des transports en commun à 6m20, l'évacuation de 850 000 personnes pour 30 à 40 jours avec le maintien sur place de 1,5 millions de personnes inondées, probablement sans chauffage et électricité pendant 30 à 40 jours. Et bien que la RATP ait prévu la construction de murs en moellons autour des stations de métro, à un certain niveau et en fonction des courts circuits de réseaux, le métro pourrait être totalement inondé.

En 1910, il y avait 65 000 abonnés à l'électricité à Paris. Aujourd'hui, et en fonction de la sophistication électronique plus sensible à l'eau que l'électricité de 1910, le temps de remplacement en pénurie de matériel est inconnu.

L'autre problème est l'évacuation du parc automobile vers des zones non inondables avec retour sur des distances importantes en zones inondées et sans transport en commun.

### Paris - Mise en place du projet.

L'étude par simulation du projet permettra de définir les paramètres :
- Efficacité du produit à diverses doses
- Efficacité à diverses vitesses
- Efficacité à diverses vitesses en fonction des turbulences
- Points d'injection favorables
- Zone de temps favorable à l'injection

Il ressortira probablement que les injections doivent se faire au niveau des affluents en tenant compte que le temps de dissolution d'un polyacrylamide sous forme poudre est d'une heure environ. Le programme d'injection lui-même sera variable en fonction de la durée, du débit et du niveau.

La mise en place du produit dans des silos type silos à grains ne pose pas de problème mais il faudra vérifier périodiquement le vieillissement du produit qui devrait pouvoir être utilisable plus de 10 ans sur des polymères de haute qualité.

La dispersion dans les rivières peut se faire par dispersion dans un cône à eau monté sur des pompes centrifuges. Une pompe centrifuge de 500 m³/h peut disperser 5 tonnes/heure de produit rejeté directement dans la rivière.

Evidemment, ce nouveau développement possible doit faire l'objet d'études d'optimisation en tenant compte que le procédé lui-même est validé par des études et des réalisations antérieures sur des débits beaucoup plus faibles.

## Revendications

1. Procédé pour limiter le niveau des crues d'un cours d'eau en particulier d'un fleuve, d'une rivière et/ou d'un de leur affluent **caractérisé en ce qu'**il consiste à injecter dans ledit cours d'eau au moins un réducteur de friction sous la forme d'un polymère hydrosoluble.

2. Procédé selon la revendication 1, **caractérisé en ce que** le cours d'eau a une vitesse supérieure à 1,5 mètre/seconde et préférentiellement supérieure à 2 mètre/seconde.

3. Procédé selon l'une des revendications précédentes, **caractérisé en ce qu'**on injecte le réducteur de friction sous la forme d'un polymère hydrosoluble en amont du site à protéger.

4. Procédé selon la revendication 1, **caractérisé en ce que** le polymère hydrosoluble est sous forme poudre.

5. Procédé selon la revendication 1, **caractérisé en ce que** le polymère hydrosoluble est dispersé par une pompe centrifuge et injecté directement dans le cours d'eau.

6. Procédé selon la revendication 1, **caractérisé en ce que** le polymère hydrosoluble est un polymère à base d'acrylamide ou un polyoxyde d'éthylène.

7. Procédé selon la revendication 1, **caractérisé en ce que** la quantité de polymère hydrosoluble injecté dans le cours d'eau est comprise entre 10 et 1000 ppm.

8. Procédé selon la revendication 1, **caractérisé en ce que** le polymère hydrosoluble est un polymère à base d'acrylamide obtenu par copolymérisation de l'acrylamide avec les monomères suivants : l'acide acrylique, l'ATBS (2-acrylamido-2-methylpropanesulfonic acide), le chlorure de diallyl diméthyl ammonium (DADMAC) l'acrylate de dialkylaminoéthyle (ADAME) et le méthacrylate de dialkylaminoéthyle (MADAME) ainsi que leurs sels acidifiés ou quaternisés, la N-vinyl pyrrolidone.

9. Procédé selon la revendication 1, **caractérisé en ce que** lorsque le polymère hydrosoluble est un polymère à base d'acrylamide, son poids moléculaire est compris entre 5 et 30 millions de g/mol.

## Patentansprüche

1. Verfahren zur Begrenzung des Hochwasserpegels eines Wasserlaufs, insbesondere eines Stromes, eines Flusses und/oder eines Zuflusses davon, **dadurch gekennzeichnet, dass** es darin besteht, in den Wasserlauf mindestens einen Reibungsverringerer in Form eines wasserlöslichen Polymers einzuspritzen.

2. Verfahren nach Anspruch 1, **dadurch gekennzeichnet, dass** der Wasserlauf eine Geschwindigkeit von mehr als 1,5 Meter/Sekunde und vorzugsweise mehr als 2 Meter/Sekunde aufweist.

3. Verfahren nach einem der vorangehenden Ansprüche, **dadurch gekennzeichnet, dass** der Reibungsverringerer in Form eines wasserlöslichen Polymers stromaufwärts der zu schützenden Stelle eingespritzt wird.

4. Verfahren nach Anspruch 1, **dadurch gekennzeichnet, dass** das wasserlösliche Polymer in Pulverform vorliegt.

5. Verfahren nach Anspruch 1, **dadurch gekennzeichnet, dass** das wasserlösliche Polymer durch eine Zentrifugalpumpe dispergiert und direkt in den Wasserlauf eingespritzt wird.

6. Verfahren nach Anspruch 1, **dadurch gekennzeichnet, dass** das wasserlösliche Polymer ein Acrylamidpolymer oder ein Ethylenpolyoxid ist.

7. Verfahren nach Anspruch 1, **dadurch gekennzeichnet, dass** die Menge des wasserlöslichen Polymers, das in den Wasserlauf injiziert wird, zwischen 10 und 1000 ppm liegt.

8. Verfahren nach Anspruch 1, **dadurch gekennzeichnet, dass** das wasserlösliche Polymer ein Acrylamidpolymer ist, das durch Copolymerisation von Acrylamid mit den folgenden Monomeren erhalten wird: Acrylsäure, ATBS (2-Acrylamido-2-methylpropansulfonsäure), Diallyldimethylammoniumchlorid (DADMAC), Dialkylaminoethylacrylat (ADAME) und Dialkylaminoethylmethacrylat (MADAME) sowie deren gesäuerte oder quaternisierte Salze, N-Vinylpyrrolidon.

9. Verfahren nach Anspruch 1, **dadurch gekennzeichnet, dass**, wenn das wasserlösliche Polymer ein Acrylamidpolymer ist, sein Molekulargewicht zwischen 5 und 30 Millionen g/mol liegt.

## Claims

1. Process for limiting the level of flooding of a watercourse notably a wide river, a narrow river and/or one of its tributaries **characterized in that** is consists of injecting into the said watercourse at least one friction-reduction agent in the form of a water-soluble polymer.

2. Process according to claim 1, **characterized in that** the watercourse has a velocity greater than 1.5 meters per second, and preferably greater than 2 meters per second.

3. Process according to one of the preceding claims, **characterized in that** the friction-reduction agent in the form of a water-soluble polymer is injected upstream of the site to be protected.

4. Process according to claim 1, **characterized in that** the water-soluble polymer is in powder form.

5. Process according to claim 1, **characterized in that** the water-soluble polymer is dispersed by a centrifugal pump and injected directly into the watercourse.

6. Process according to claim 1, **characterized in that** the water-soluble polymer is an acrylamide-based polymer or an ethylene polyoxide.

7. Process according to claim 1, **characterized in that** the quantity of water-soluble polymer injected into the watercourse is between 10 and 1000 ppm.

8. Process according to claim 1, **characterized in that** the water-soluble polymer is an acrylamide-based polymer obtained by co-polymerization of acrylamide with the following monomers: acrylic acid; ATBS (2-acrylamido-2-methylpropanesulfonic acid); diallyl dimethyl ammonium chloride (DADMAC); dialkylaminoethyl acrylate (ADAME) and dialkylaminoethyl methacrylate (MADAME) and their acidified or quaternized salts; N-vinyl pyrrolidon.

9. Process according to claim 1, **characterized in that** when the water-soluble polymer is an acrylamide-based polymer, its molecular weight is between 5 and 30 million g/mol.
